## Europäisches Patentamt

## European Patent Office

## Office européen des brevets

(19)

(11) Veröffentlichungsnummer: **0 052 695**
**A2**

(12) **EUROPÄISCHE PATENTANMELDUNG**

(21) Anmeldenummer: **81105810.6**

(22) Anmeldetag: **23.07.81**

(51) Int. Cl.³: **H 04 N 7/10**
**H 04 J 6/02**

(30) Priorität: **25.11.80 DE 3044269**

(43) Veröffentlichungstag der Anmeldung:
**02.06.82 Patentblatt 82/22**

(84) Benannte Vertragsstaaten:
**AT BE CH DE FR GB IT LI LU NL SE**

(71) Anmelder: **GRUNDIG E.M.V. Elektro-Mechanische Versuchsanstalt Max Grundig & Co. Kg.**
**Kurgartenstrasse 37**
**D-8510 Fürth/Bayern(DE)**

(72) Erfinder: **Boenisch, Werner, Dipl.-Ing.**
**Ronhofer Weg 39**
**D-8510 Fuerth(DE)**

(72) Erfinder: **Beekmann, Erich, Ing. grad.**
**Weiherhofer Hauptstrasse**
**D-8501 Zirndorf(DE)**

(74) Vertreter: **Voigt, Günter**
**Kurgartenstrasse 37**
**D-8510 Fürth(DE)**

(54) Übertragungssystem für Videosignale und Hilfssignale in Gegenrichtung im Multiplex-Verfahren auf ein- und derselben Übertragungsleitung.

(57) Es wird ein Übertragungssystem für Videosignale beschrieben, bei der Hilfssignale in Gegenrichtung im Multiplexverfahren auf ein und derselben Leitung übertragen werden. Die Übertragungsrichtung der Strecke wird dabei zu jeweils den Zeiten umgeschaltet, in denen innerhalb eines normalen Videosignals keine Information übertragen wird. Die Umschaltung der Übertragungsrichtung erfolgt vorzugsweise selbsttätig durch das ankommende Signal.

EP 0 052 695 A2

./...

FIG. 1

a) Eingangssignal des Senders

b) Umschaltsignal des Senders

c) Eingangssignal des ersten Zwischenverstärkers

d) Umschaltsignal des ersten Zwischenverstärkers

e) Eingangssignal des zweiten Zwischenverstärkers

f) Umschaltsignal des zweiten Zwischenverstärkers

g) Eingangssign. des Empfängers

h) Umschaltsignal des Empfängers

i) Sendebefehlsign. des Empfängers

j) Ausgangssignal des Empfängers

– 1 –

ÜBERTRAGUNGSSYSTEM FÜR VIDEOSIGNALE UND HILFSSIGNALE IN
GEGENRICHTUNG IM MULTIPLEX-VERFAHREN AUF EIN UND DERSEL-
BEN ÜBERTRAGUNGSLEITUNG

## BESCHREIBUNG

Die Erfindung bezieht sich auf ein Übertragungssystem für
Videosignale und Hilfssignale in Gegenrichtung im Multiplex-Verfahren auf ein und derselben Übertragungsleitung.

Bei der trägerfrequenten Übertragung von Fernsehsignalen
sind Ausführungen bekannt, bei denen trägerfrequente
Hilfskanäle in z. B. tieferer Frequenzlage als das Hauptsignal in Gegenrichtung zum Hauptsignal übertragen werden.
Es liegt also ein Frequenzmultiplex-Verfahren vor. Ähnliche Verfahren sind auch bei der videofrequenten Übertragung über koaxiale Leitungen bekannt, wobei hier das
Hilfssignal trägerfrequent in einer höheren Frequenzlage
als das Hauptsignal in Gegenrichtung zum Hauptsignal
übertragen wird.

− 2 −

Wegen des starken Dämpfungsanstieges von symmetrischen Leitungen ist ein solches Verfahren bei der Zweidraht-Übertragungstechnik normalerweise nicht möglich.

Der Erfindung liegt die Aufgabe zugrunde, bei einer Zweidraht-Übertragungstechnik Hilfssignale in Gegenrichtung zu einem Hauptsignal (Videosignal) zu übertragen, ohne daß zusätzliche Leitungen benötigt werden.

Diese Aufgabe wird durch die im kennzeichnenden Teil des Anspruchs 1 angegebenen Merkmale gelöst.

Vorteilhafte Weiterbildungen des erfindungsgemäßen Übertragungssystems ergeben sich aus den Unteransprüchen.

Mit dem erfindungsgemäßen Übertragungssystem lassen sich die Übertragungseigenschaften, insbesondere an kaskadierten, längeren Verstärkerfeldern, verbessern. Darüber hinaus sind keine zusätzlichen Übertragungsleitungen erforderlich, wenn ein Signal beispielsweise zur Fernsteuerung einer Fernsehaufnahmekamera in Gegenrichtung zum Hauptsignal (Videosignal) übertragen wird, z. B. während der Zeit der schwarzgesteuerten Zeilen, die nach dem Bildsynchronimpuls für den Bildrücklauf benötigt werden, dieses Steuersignal übertragen wird. Dabei ist ein Einbau in Leitungsverstärker ohne großen Aufwand möglich, wobei die Umschaltung der Übertragungsrichtung

— 5 —

in jedem (verwendeten) Verstärker selbsttätig, z. B. vom ankommenden Signal gesteuert, durchgeführt werden kann.

Die Erfindung wird im folgenden unter Bezugnahme auf die Zeichnung beispielsweise näher erläutert. Es zeigen

Fig. 1 Diagramme einzelner, im erfindungsgemäßen Übertragungssystem auftretender Signale,

Fig. 2 eine Prinzipschaltung eines Senders für das Hauptsignal gemäß erfindungsgemäßem Übertragungssystem,

Fig. 3 eine Prinzipschaltung eines Zwischenverstärkers für das erfindungsgemäße Übertragungssystem und

Fig. 4 eine Prinzipschaltung eines Empfängers für das Hauptsignal gemäß erfindungsgemäßem Übertragungssystem.

Erfindungsgemäß werden die Hilfssignale im Zeitmultiplex-Verfahren auf derselben Leitung wie das Hauptsignal übertragen. Hierzu wird die Übertragungsrichtung der Übertragungsstrecke während der Zeiten umgeschaltet, in denen innerhalb eines normalen Videosignals keine Information übertragen wird.

Die Umschaltung könnte zwar generell in jeder Zeile, z.B. während der Zeilenaustastung erfolgen; wegen der recht großen Signallaufzeiten von einigen zehn Mikrosekunden ist jedoch kaum eine zeitliche Zuordnung zwischen Austastlage des Hauptsignals und Einspeise- bzw. Abnahmezeitpunkt des Hilfssignals am Ende bzw. Anfang einer Übertragungsstrecke möglich. Das Hilfssignal sollte deshalb in einem Zeitintervall übertragen werden, das ausreichend groß gegen die Signallaufzeit der Übertragungsstrecke ist, d.h. groß gegen 50 ... 100 $\mu$s. Als "ungenutzte" Zeit bleibt dafür in einem normalen Videosignal nur das Intervall zwischen Bildsynchronimpuls und Beginn der ersten Signalzeile (hierbei muß ggf. die Übertragung von Prüfzeilensignalen im Hauptsignal berücksichtigt werden).

Die Umschaltung kann in jedem Verstärker selbsttätig, z.B. vom ankommenden Signal gesteuert, durchgeführt werden:

Eine bestimmte Zeit nach dem Bildsynchronimpuls wird die Übertragungsrichtung umgeschaltet. Wieder eine bestimmte Zeit später wird in die ursprüngliche Übertragungsrichtung zurückgeschaltet. Nach dem Umschalten in die Gegenrichtung speist der Empfänger des Hauptsignals das Hilfssignal rückwärts in die Übertragungsleitung ein. Das Hilfssignal wird ggf. über bereits umgeschaltete Zwischenverstärker hinweg gegen die Übertragungsrichtung des Hauptsignals bis zum ebenfalls bereits umgeschalteten Sender des Hauptsignals übertragen. Dieser nimmt das Hilfssignal auf und

_5 _.

leitet es Auswertestufen zu. Ausreichend lange vor Beginn der Rückschaltung in die normale Richtung wird die Aussendung des Hilfssignals im Empfänger des Hauptsignals unterbrochen, damit der letzte Impuls des Hilfssignals nach Durchlaufen der gesamten Übertragungsstrecke im Sender des Hauptsignals noch sicher vor Rückschaltung in die normale Übertragungsrichtung aufgenommen werden kann.

Während der Zeit der Umschaltung in die Gegenrichtung liefert der Empfänger an die das Hauptsignal verarbeitenden Auswertestufen das Synchronsignal weiter, so daß für diese Stufen keine Unterbrechung des Hauptsignals besteht. Im folgenden wird dies unter Bezugnahme auf die Zeichnungsfiguren verdeutlicht:

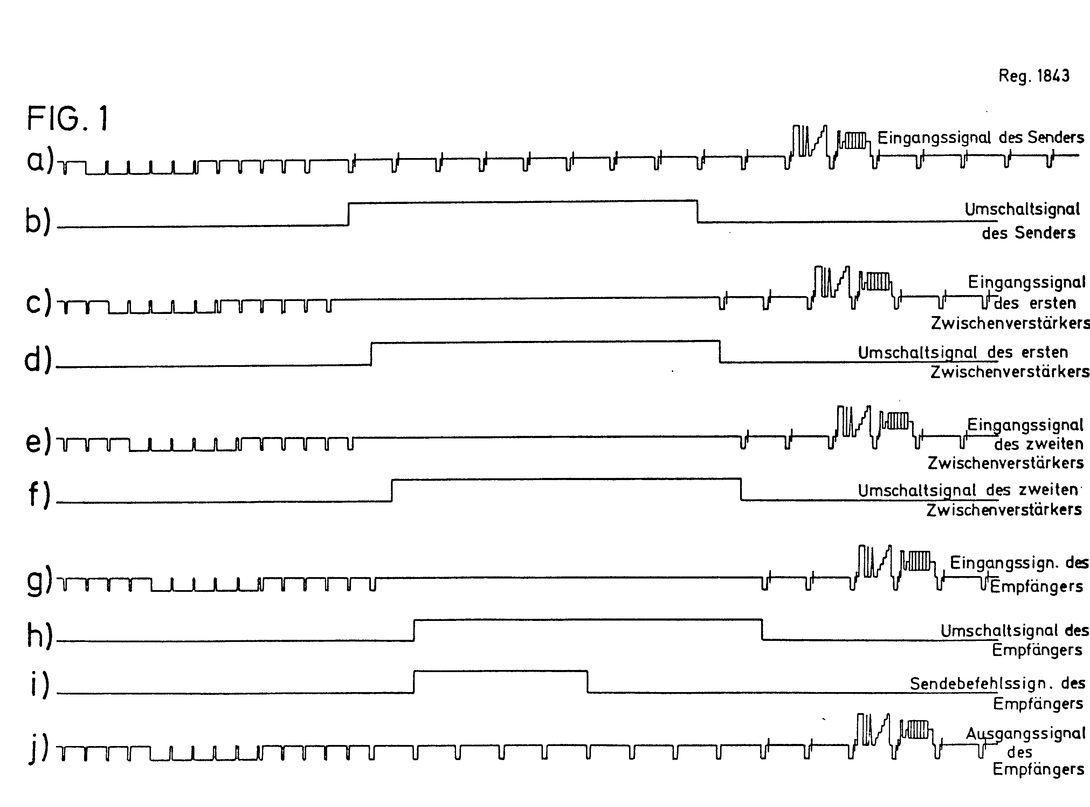

In Fig. 1 ist oben zunächst das Eingangssignal des Senders dargestellt; hier der Ausschnitt von Zeile 625 des vierten Teilbildes bis zur zweiundzwanzigsten Zeile des ersten Teilbildes. Prüfzeilensignale sind in der siebzehnten und achtzehnten Zeile angedeutet (Fig. 1a). Beispielsweise vom Beginn der siebten Zeile bis zum Ende der vierzehnten Zeile wird die Übertragungsrichtung des Senders umgeschaltet (Fig. 1b).

0,5 H später kommt das Ausgangssignal des Senders am ersten Zwischenverstärker an (Fig. 1c). Auch dieser Zwischenverstärker wird vom Beginn der siebten Zeile bis zum Ende

_ 6 _

der vierzehnten Zeile in seiner Übertragungsrichtung umgeschaltet (Fig. 1d).

Wiederum 0,5 H später, also 1,0 H nach Aussendung des Signals am Sender, kommt das Übertragungssignal am zweiten Zwischenverstärker an (Fig. 1e). Auch hier soll die Umschaltung wieder vom Beginn der siebten Zeile bis zum Ende der vierzehnten Zeile erfolgen (Fig. 1f).

Gleiche Verstärkerfeldlängen vorausgesetzt erhält der Empfänger am Ende der gesamten Übertragungsstrecke das Signal abermals um 0,5 H später, also 1,5 H nach Aussendung des Signals am Sender (Fig. 1g). Auch im Empfänger soll einmal die Umschaltung der Übertragungsrichtung vom Beginn der siebten Zeile an bis zum Ende der vierzehnten Zeile erfolgen (Fig. 1h).

Mit Beginn der Richtungsumschaltung wird im Empfänger ein Sendebefehl zur Aussendung des in Gegenrichtung zum Hauptsignal zu übertragenden Signals gegeben. Dieser Sendebefehl soll in diesem Beispiel einmal am Ende der zehnten Zeile (vom Empfänger aus gesehen) enden (Fig.1i). Damit ist sichergestellt, daß das in Gegenrichtung zum Hauptsignal übertragene Hilfssignal um die Laufzeit der Gesamtstrecke (hier im Beispiel wieder 1,5 H) später am Sender des Hauptsignals noch rechtzeitig vor Ende der vierzehnten Zeile (vom Sender aus gesehen) endet.

- 7 -

Vom Umschaltimpuls des Empfängers gesteuert, soll in diesem Beispiel auf den Ausgang des Empfängers ein Impulsgenerator geschaltet werden, der für die Umschaltzeit des Empfängers (in Signalgegenrichtung) Hilfssynchronimpulse an die am Ausgang des Empfängers angeschlossenen Verbraucher liefert (Fig. 1j).

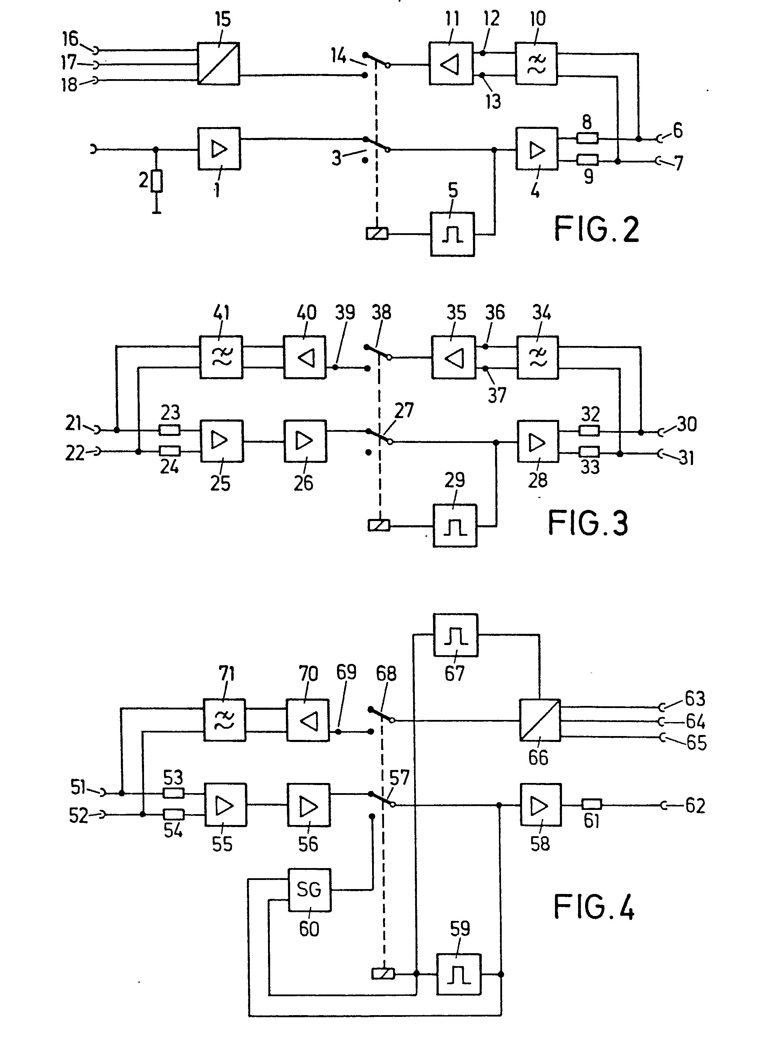

Gemäß Fig. 2, die eine Prinzipschaltung eines Senders (für das Hauptsignal) darstellt, wird das Video-Eingangssignal einem Eingangsverstärker 1 zugeführt; ein Widerstand 2 stellt dabei den Abschlußwiderstand der ankommenden Leitung dar. Über einen Umschalter 3 gelangt das Signal auf einen Ausgangsverstärker 4 und gleichzeitig auf eine Schaltstufe 5, die aus dem Videosignal ein Schaltsignal erzeugt, das den Umschalter 3 z. B. nach dem V-Synchronimpuls vom Beginn der siebten Zeile bis zum Ende der vierzehnten Zeile ansteuert. In dieser Zeit wird dem Ausgangsverstärker 4 kein Eingangssignal zugeführt. Während der übrigen Zeit gibt der Ausgangsverstärker 4, der einen gegen den Wellenwiderstand einer an Ausgangsklemmen 6 und 7 angeschlossenen symmetrischen Leitung ausreichend kleinen Innenwiderstand hat, das Videosignal über Widerstände 8 und 9 symmetrisch auf die abgehende Leitung. Die Widerstände 8 und 9 bilden zusammen den Abschlußwiderstand der abgehenden Leitung.

An den Ausgangsklemmen 6 und 7 ist über einen symmetrischen Tiefpaß 10 ein Verstärker 11 angeschlossen, der ein

_ 8 _

an seinen Eingangsklemmen 12 und 13 anliegendes Signal verstärkt und weiter unsymmetrisch auf einen Umschalter 14 gibt. Der Eingangswiderstand des Verstärkers 11 ist ausreichend groß gegen den Wellenwiderstand der an den Ausgangsklemmen 6 und 7 angeschlossenen Leitung. Während der Umschaltzeit (im gewählten Beispiel vom Beginn der siebten Zeile nach einem Vertikalsynchronimpuls bis zum Ende der vierzehnten Zeile) ist der Ausgang des Verstärkers 11 mit dem Eingang einer Auswerteschaltung 15 verbunden. Die Auswerteschaltung 15 erzeugt aus einem ihr angelieferten Zeitmultiplex-Signal die Steuerspannungen z. B. für eine an ihren Ausgängen 16, 17 und 18 angeschlossene Fernsehaufnahmekamera. Selbstverständlich sind auch mehr oder weniger als drei Ausgänge möglich.

Gemäß Fig. 3, die eine Prinzipschaltung eines Zwischenverstärkers darstellt, wird das ankommende symmetrische Hauptsignal von Eingangsklemmen 21 und 22 über Widerstände 23 und 24 einem Eingangsverstärker 25 zugeführt, dessen Eingangswiderstand ausreichend klein gegen den Wellenwiderstand einer an den Eingangsklemmen 21 und 22 angeschlossenen symmetrischen Leitung ist. Die Widerstände 23 und 24 bilden zusammen den Abschlußwiderstand der ankommenden Leitung. Unsymmetrisch gibt der Eingangsverstärker 25 das Signal weiter auf einen Hauptverstärker 26. Dieser Hauptverstärker entzerrt das Signal und gibt es in Sollgröße über einen Umschalter 27 auf einen Ausgangsverstärker 28 und gleichzeitig auf eine Schaltstufe 29, die aus dem Videosignal ein Schaltsignal erzeugt, das den Umschalter 27 z. B. nach dem Vertikalsynchronimpuls vom Beginn der siebten Zeile bis zum Ende der vierzehnten Zeile ansteuert. In dieser Zeit wird dem Ausgangsverstärker 28 kein Signal zugeführt. Während der übrigen Zeit gibt der Ausgangsverstärker 28, der einen Innenwiderstand hat, der seinerseits ausreichend klein gegen den Wellenwiderstand eine an Ausgangsklemmen 30 und 31 angeschlossenen symmetrischen Leitung ist, das Videosignal über Widerstände 32 und 33 symmetrisch auf die abgehende Leitung. Die Widerstände 32 und 33 bilden zusammen den Abschlußwiderstand der abgehenden Leitung.

An den Ausgangsklemmen 30 und 31 ist über einen symmetrischen Tiefpaß 34 ein Verstärker 35 angeschlossen, der ein an seinen Eingangsklemmen 36 und 37 anliegendes Signal verstärkt und weiter unsymmetrisch auf einen Umschalter 38 gibt. Der Eingangswiderstand des Verstärkers 35 ist ausreichend groß gegen den Wellenwiderstand der an den Ausgangsklemmen 30 und 31 angeschlossenen Leitung. Während der Umschaltzeit (im gewählten Beispiel vom Beginn der siebten Zeile nach einem Synchronimpuls bis zum Ende der vierzehnten Zeile) ist der Ausgang des Verstärkers 35 mit dem Eingang 39 eines weiteren Verstärkers 40 verbunden, der das Ausgangssignal des Verstärkers 35 über einen symmetrischen Tiefpaß 41 symmetrisch den Eingangsklemmen 21 und 22 des Zwischenverstärkers zuführt. Der Innenwiderstand des Verstärkers 40 ist ausreichend groß gegen den Wellenwiderstand der an den Eingangsklemmen 21 und 22 angeschlossenen Leitung.

Gemäß Fig. 4, die eine Prinzipschaltung eines Empfängers (für das Hauptsignal) darstellt, wird das ankommende symmetrische Signal von Eingangsklemmen 51 und 52 über Widerstände 53 und 54 einem Eingangsverstärker 55 zugeführt, dessen Eingangswiderstand ausreichend klein gegen den Wellenwiderstand einer an den Eingangsklemmen 51 und 52 angeschlossenen symmetrischen Leitung ist.

Die Widerstände 53 und 54 bilden zusammen den Abschlußwiderstand der ankommenden Leitung. Unsymmetrisch gibt der Eingangsverstärker 55 das Signal weiter auf einen Hauptverstärker 56. Dieser Hauptverstärker entzerrt das Signal und gibt es in Sollgröße über einen Umschalter 57 auf einen Ausgangsverstärker 58 und gleichzeitig auf eine Schaltstufe 59, die aus dem Videosignal ein Schaltsignal erzeugt, das den Umschalter 57 z. B. nach dem Vertikalsynchronimpuls vom Beginn der siebten Zeile bis zum Ende der vierzehnten Zeile ansteuert. In dieser Zeit wird dem Ausgangsverstärker 58 nur das Ausgangssignal eines Synchron-Generators 60 zugeführt, der ebenfalls am Umschalter 57 angeschlossen ist und - zusätzlich durch das Signal der Schaltstufe 59 gesteuert - während der Umschaltzeit Synchronimpulse mit Bildinhalt "Schwarz" an den Ausgangsverstärker 58 liefert. Der Ausgangsverstärker 58, dessen Innenwiderstand sehr klein ist, gibt das

- 11 -

Gesamtsignal über einen Widerstand 61 auf eine Ausgangsbuchse 62, an der das Signal abgenommen und einem oder
mehreren Verbrauchern zugeführt werden kann.

Über Eingänge 63, 64, 65 werden Steuersignale auf eine
Schaltung 66 gegeben. Selbstverständlich sind auch mehr
oder weniger als drei Eingänge möglich. Mit 67 ist ein
Impulsgenerator bezeichnet, der vom Ausgangssignal der
Schaltstufe 59 gesteuert einen Impuls erzeugt, der eine
um einen bestimmten Wert kürzere Dauer als der Umschaltimpuls hat. Dieser Impuls gibt der Schaltung 66 den
Befehl zur Aussendung z. B. eines Zeitmultiplex-Signals,
das die Steuersignale der Eingänge 63, 64, 65 in codierter Form gemeinsam über einen geschlossenen Umschalter 68 auf den Eingang 69 eines Verstärkers 70 gibt.
Das Ausgangssignal des Verstärkers 70 wird symmetrisch
über einen Tiefpaß 71 den Eingangsklemmen 51 und 52 des
Empfängers zugeführt.

0052695

— 1 —

ÜBERTRAGUNGSSYSTEM FÜR VIDEOSIGNALE UND HILFSSIGNALE IN
GEGENRICHTUNG IM MULTIPLEX-VERFAHREN AUF EIN UND DERSEL-
BEN ÜBERTRAGUNGSLEITUNG

PATENTANSPRÜCHE

1. Übertragungssystem für Videosignale und Hilfssignale in Gegenrichtung im Multiplex-Verfahren auf ein
und derselben Übertragungsleitung,

d a d u r c h   g e k e n n z e i c h n e t ,

daß die Hilfssignale im Zeitmultiplex-Verfahren auf derselben Übertragungsleitung wie das Videosignal (Hauptsignal) übertragen werden, wobei die Übertragungsrichtung
der Übertragungsstrecke während der Zeiten umgeschaltet
wird, in denen innerhalb eines normalen Videosignals keine Information übertragen wird.

2. Übertragungssystem nach Anspruch 1,   d a -
d u r c h   g e k e n n z e i c h n e t ,   daß das Hilfssignal in einem Zeitintervall übertragen wird, das ausreichend groß gegenüber der Signallaufzeit der Übertragungsstrecke ist.

3. Übertragungssystem nach Anspruch 2, d a - d u r c h   g e k e n n z e i c h n e t , daß für das Zeitintervall das Intervall zwischen Bildsynchronimpuls und Beginn der ersten Signalzeile des Videosignals vorgesehen ist.

4. Übertragungssystem nach einem der Ansprüche 1 bis 3, d a d u r c h   g e k e n n z e i c h n e t , daß die Umschaltung der Übertragungsrichtung selbsttätig, z. B. vom ankommenden Signal gesteuert, erfolgt.

5. Übertragungssystem nach einem der Ansprüche 1 bis 4, d a d u r c h   g e k e n n z e i c h n e t , daß ausreichend lange vor Beginn der Rückschaltung in die Normalrichtung die Aussendung des Hilfssignals im Empfänger des Hauptsignals unterbrochen wird, wodurch der letzte Impuls des Hilfssignals nach Durchlaufen der gesamten Übertragungsstrecke im Sender des Hauptsignals sicher vor der Rückschaltung in die normale Übertragungsrichtung aufgenommen wird.

6. Übertragungssystem nach einem der vorhergehenden Ansprüche 1 bis 5, d a d u r c h   g e k e n n - z e i c h n e t , daß während der Zeit der Umschaltung in die Gegenrichtung der Empfänger an die das Hauptsignal verarbeitenden Stufen das Synchronsignal weiterliefert.

Beschreibung:

Reg. 1843

FIG. 1

a) Eingangssignal des Senders

b) Umschaltsignal des Senders

c) Eingangssignal des ersten Zwischenverstärkers

d) Umschaltsignal des ersten Zwischenverstärkers

e) Eingangssignal des zweiten Zwischenverstärkers

f) Umschaltsignal des zweiten Zwischenverstärkers

g) Eingangssign. des Empfängers

h) Umschaltsignal des Empfängers

i) Sendebefehlssign. des Empfängers

j) Ausgangssignal des Empfängers

1/2

0052695

FIG.2

FIG.3

FIG.4